# EUROPEAN PATENT APPLICATION

(11) **EP 1 235 082 A1**
(43) Date of publication of application: **28.08.2002**
(21) Application number: 01870034.4
(22) Date of filing: 22.02.2001
(51) Int. Cl.: G01V 1/053

(54) **Method and apparatus to generate shear wave signals and measure seismic parameters in penetrable media**

(71) Applicant: UNIVERSITEIT GENT, 9000 Gent (BE)
(72) Inventor: Areias, Lou, 3001 Heverlee (BE); Van Impe, William Frans, 9420 Mere (BE); Haegeman, Wim, 9310 Assebroek (BE)
(74) Representative: Brants, Johan Philippe Emile

(57) **Abstract**

This invention relates to a method for producing high energy horizontal polarised SH signals. SH signals are used to estimate wave velocities in SCPT and other in-situ geophysical tests requiring generation of SH seismic signals. The process improves upon existing methods of generating SH signals by introducing a new load-decoupling system capable of isolating applied loads from a beam-source system as well as the determination of the optimum load to generate the maximum shear wave amplitude. This invention further relates to a new source design, which improves upon existing methods of measuring offset distances to calculate seismic wave velocities.

## Description

### FIELD OF THE INVENTION

The present invention lies in the fields of geotechnical engineering and in-situ geophysical testing. More specifically, the invention relates to a method for generating high energy shear wave (S) signals and for measuring seismic parameters in penetrable media. The invention also relates to an apparatus for carrying out the method of the invention. The method of invention has immediate application in Seismic Cone Penetrometer (SCPT) and seismic flat dilatometer (FD) tests, which are currently used to measure shear modulus profiles in soils.

### BACKGROUND OF INVENTION

There is considerable interest in in-situ geophysical and geotechnical engineering test methods that can accurately measure shear (Vₛ) and compression (Vₚ) wave velocities in penetrable media. These velocities are desired because they form the core of mathematical theorems that describe elasticity and plasticity properties of soils, and which are used to predict bearing capacity, dynamic soil-structure interaction, settlement, liquefaction and failure potential. Such measurements, therefore, provide insight into the response of soil to imposed loads such as buildings, heavy equipment, earthquakes, and explosions.

Elasticity theory relates shear modulus (G) to soil density (p) and Vₛ as follows: G=ρVₛ². Accurate measurement of Vₛ is of utmost importance since this velocity is treated exponentially during the calculation of G modulus and other geotechnical and seismic parameters. It is, therefore, important to measure Vₛ values accurately because small errors in this parameter result in large errors of G.

Three primary methods have been developed over the years and are widely used today to measure in-situ seismic parameters in penetrable media: the cross-hole (CH) test, the SCPT test and the spectral analysis of surface waves (SASW) test.

The CH test is similar to the SCPT test except that it requires drilling of two separate holes for each test instead of only one for the SCPT test. This makes the CH method relatively more expensive and less attractive than the SCPT test. The SASW test is a non-intrusive test that relies on the use of Rayleigh surface waves to measure seismic parameters. This test measures Vₛ in the horizontal direction and is therefore used as a complementary test for the SCPT test, which measures essentially Vₛ values in the vertical direction. A disadvantage of the SASW test is its limited testing depth, which is generally limited to only 8 to 10 meters under normal operating conditions. This leaves the SCPT test as currently the most attractive in-situ method for measuring Vₛ and other seismic parameters in penetrable media. Another important advantage of the SCPT test over the other tests is that it can be performed with standard static cone penetrometer (CPT) equipment, which makes it not only versatile but also inexpensive to install and to use.

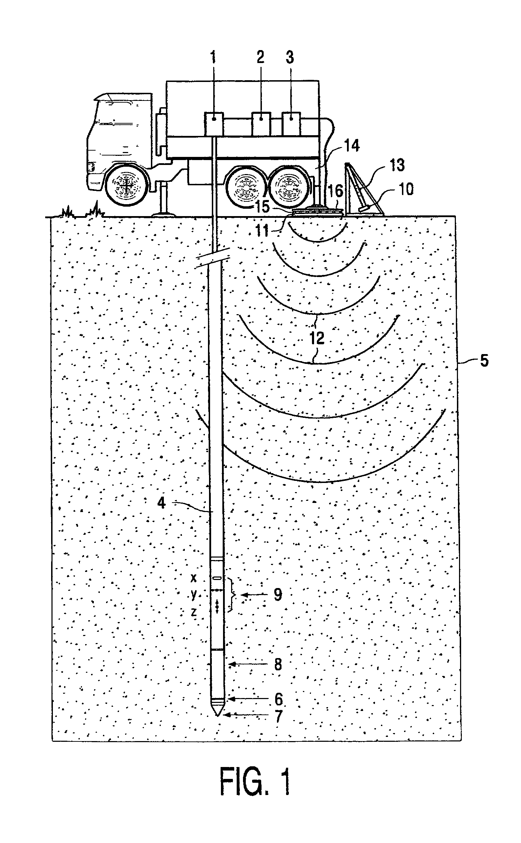

The static CPT cone (Figure 1) was modified at the University of British Columbia (UBC), Canada in the early 1980's, to incorporate geophones for measuring seismic wave velocity in soil (*Rice A., 1984, The seismic cone penetrometer. M. Sc. Thesis, Dept. of Civil Engin., Univ. of British Columbia, Vancouver, Canada, B.C.; and Robertson P.K. et al., 1986, Seismic CPT to measure in situ shear wave velocity. J. of Geotechn. Engin. 112:791*). This work led to the creation of the modern SCPT test. Recommended test procedures exist for the SCPT test (*ISRM, 1988, Suggested methods for seismic testing within and between boreholes. Internat. J. of Rock Mech., Min. Sci. and Geomech. Abstr. Vol. 25(6): 447, K. Sassa (Ed.); and Campanella R. G. et al., 1986, Seismic cone penetration test. Proceedings of In situ '86, Geotechnical Special Publication Nr. 6, ASCE*). Standard test procedures do not yet exist for the SCPT test.

US 5,991,235 relates to a system for seismic prospecting by using reflections of acoustic waves and an operation method thereof. Unprocessed raw data from a plurality of geophone sensors and other processed data are stored in a storage unit for further processing and analysis. A preferred operation comprises four stages: (i) performing test sweeps on and analysing results thereof (testing stage), (ii) determining control parameters for the spatial distribution of sensor array and data-collection sweeps based on the analysis of test sweeps (parameter-determination stage), (iii) performing data-collection sweeps (data collecting stage), and (iv) analysing and processing data-collection sweeps (data processing stage). Test sweeps and availability of unprocessed raw data allows system optimisation to achieve maximal resolution and signal-to-noise ratios.

US 5,432,305 describes an acoustic-penetrometer probe and method for determining the presence of materials in a region proximate the penetrometer probe through measurement of reflected acoustic waves, with the probe having a driving head on one end to permit forcing the driving head into the soil, with the probe including an acoustic generator mounted in the probe for generating a below-ground acoustic waves that normally travel away from the acoustic generator, and an acoustic detector located in the probe to measure acoustic waves reflected from objects or materials located proximate the probe to thereby provide a user with information on the presence of materials proximate a radial region located around the probe.

Nowadays, the SCPT test is a generally accepted technique to determine in-situ seismic wave velocities. However, one important disadvantage of current methods is that seismic sources do not always generate optimum and accurate seismic signals. In particular, determination of seismic velocities from SCPT test data is made difficult when noise is present in the recorded traces, which can mask or influence signal response through constructive and/or destructive interference. This problem of noise introduces uncertainty into seismic velocity estimations and results in variances that can be as great as those of the empirical correlation methods. Another difficulty is when generated seismic signals are too weak to be identified clearly from event data. This occurs mainly when a seismic source fails to generate strong signals, which can affect both quality and accuracy of arrival-time measurements and limit test depth.

Therefore, the first main objective of the present invention is to provide a new method and apparatus which generates high-energy seismic signals. Said high-energy seismic signals reduce signal noise and improve signal readability, which results in a more accurate measurement of seismic velocities and a better prediction of seismic and geotechnical parameters when compared with conventional methods.

A second main objective is to introduce new seismic sources that avoid error measurements of offset distances, which are required to calculate seismic velocities. Offset distances are the horizontal distances between the source and SCPT tubes that house the seismic sensors. With current SCPT seismic sources, which all have flat bottom surfaces over the entire length of the beam, the point of origin of seismic signals cannot be determined accurately. This is because a perfect contact between the source's flat surface and the ground cannot be guaranteed due to the typically uneven and irregular profile of ground surfaces. With current methods offset distances are measured from either the midpoint or the ends of the beam, which gives only an approximate measure of the true offset distance. Therefore, it is a goal of the present invention to provide new seismic sources that allow precise determination of the point of origin of seismic signals, thereby allowing accurate measurement of offset distances.

A third objective of the present invention is to provide a new method and apparatus to measure seismic parameters to larger depths than currently possible with conventional methods.

Finally, it is a last objective of the present invention to provide a method and apparatus for seismic testing which is less time consuming and less expensive compared to current methods.

### SUMMARY OF THE INVENTION

According to a first embodiment, the present invention relates to a method for in-situ seismic testing comprising the steps of:
(a) inserting a seismic cone penetrometer containing at least one geophone to a certain depth in the ground,
(b) placing nearby the insertion point of the penetrometer an impact means capable of producing ground penetrating seismic waves, and
(c) placing a load having a defined weight upon impact means, whereby said weight of the load indirectly acts upon said impact means.

In contrast to methods currently available, in the new method of the invention the weight of the load acts indirectly upon impact means, thereby providing an optimum coupling stress with the ground without adding to the overall mass of the source. As explained further below in the description, decoupling means are placed between the load and impact means to isolate the load from the impact means. A major advantage of this new method is that shear waves generated with this decoupled system contain 2 to 3 times more energy than seismic signals produced using conventional methods, where the load is acting directly upon impact means. Also, seismic events measured with conventional methods often have signal to-noise ratios as low as 0.01. In other words, these signals can have 100 times as much noise as the real generated signal. Generating high energy shear waves by the new method of this invention greatly improves signal-to-noise ratio. This results in a more accurate measurement of seismic wave velocities and better prediction of geotechnical and seismic parameters when compared with conventional methods. Results of field tests performed using the method of invention and conventional methods are presented further on in this text to illustrate the superior performance of the new method of this invention.

For instance the method of this invention may be used to generate high energy shear wave signals for SCPT tests, and similar tests using said signals such as the flat dilatometer test equipped with sensors to record seismic waves (*Martin G.K. and Mayne P.W. 1998. Seismic flat dilatometer tests in Piedmont residual soils, Geotechnical site characterization, ISC'98 vol. 2*)

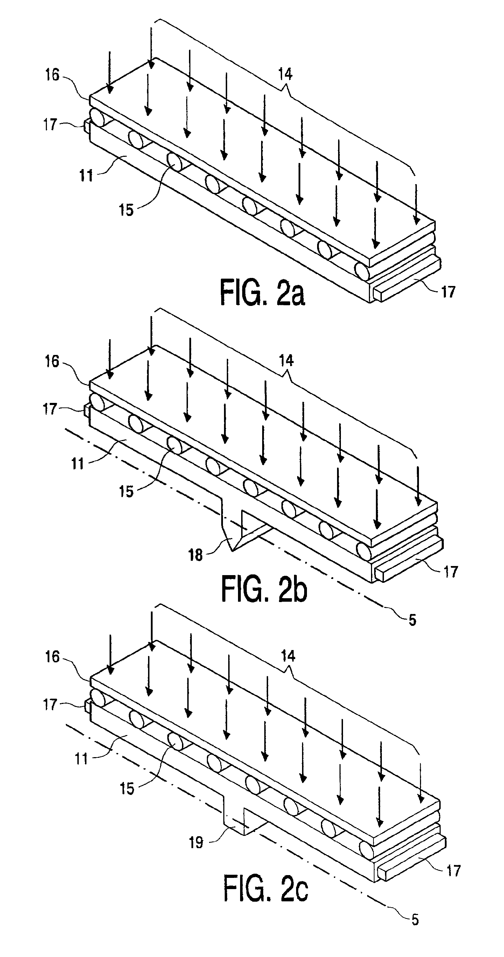

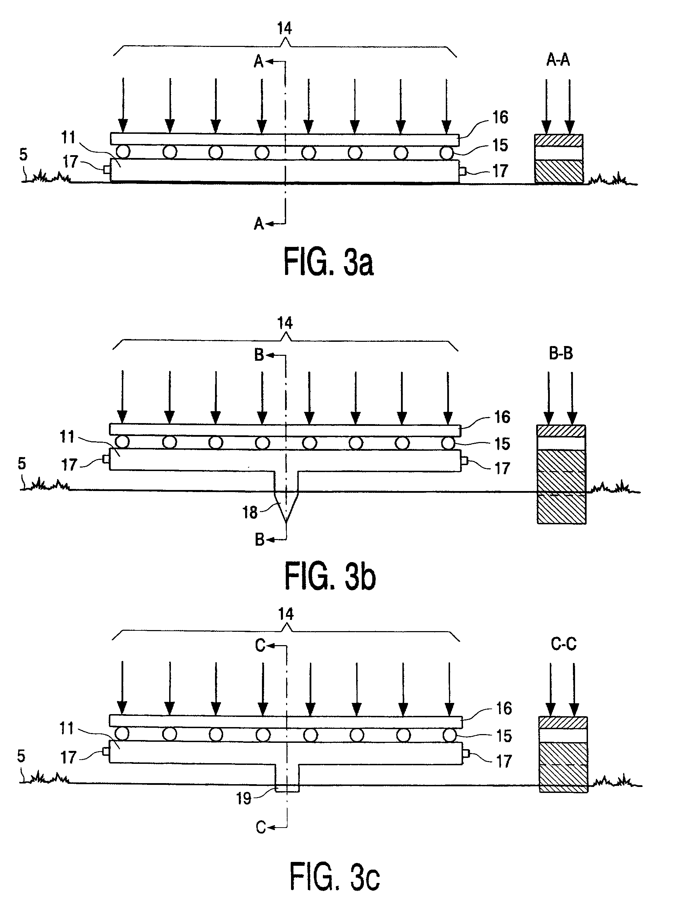

According to a more specific embodiment, said in the ground penetrating waves as defined in claim 1 of the invention are generated from a well-defined starting position on the impact means. This may be realized by providing spikes or blades at the underside of the impact means, as illustrated in Figures 2 and 3, and explained further below. However, it should be appreciated by those skilled in the art that said spikes or blades are merely illustrative and non-limiting for the present invention.

According to yet another embodiment, the present invention also provides an apparatus for seismic geophysical testing comprising
(a) an in the ground insertable seismic cone penetrometer containing at least one geophone capable of detecting seismic waves,
(b) an impact means capable of producing ground penetrating seismic waves,
(c) a load having a defined weight and placed upon said impact means, and
(d) a decoupling means providing an indirect action of the load on the impact means.

These embodiments and other features and advantages of the present invention are more fully set forth in the following detailed description and the accompayning figures in which similar characters denote similar elements throughout the several views.

### BRIEF DESCRIPTION OF THE DRAWINGS

Figure 1 is a schematic cross-sectional view of a typical CPT truck which can be used for SCPT testing.
Figure 2 is a perspective view of an embodiment of decoupled seismic source mechanisms according to the invention.
Figure 3 is a cross-sectional view of an embodiment of decoupled seismic source mechanisms.
Figure 4 shows typical results of the variation of maximum signal amplitude with applied stress when using free weights as loading. These results were obtained using the method of the invention with a decoupling mechanism or a conventional method. Impacts were generated with a swing angle of 15°. Details of tests are given in the examples presented further on this document.
Figure 5 shows typical results of the variation of maximum signal amplitude with applied stress when using free weights as loading. These results were obtained using the method of the invention with a decoupling mechanism or a conventional method. Impacts were generated with a swing angle of 45°.
Figure 6 shows typical results of the variation of maximum signal amplitude with applied stress when using the weight of a CPT truck as loading. These results were obtained using the method of the invention with a decoupling mechanism for impacts generated with a swing angle of 15° or 45°.

### DETAILED DESCRIPTION OF THE PREFERRED EMBODIMENTS

The main embodiments of the invention, and several variations of these embodiments, will now be described with reference to the drawings. Other embodiments will be apparent to those skilled in the art. Although the invention is described in terms of the Figures 1-3, it will be recognized that many of the features and components of these different designs can be appropriately combined and/or interchanged.

Figure 1 depicts a typical SCPT truck which may be used for SCPT testing. This truck contains a thrust machine 1, a CPT recording unit 2, a seismograph 3 and a cone penetrometer 4 which can be inserted into the ground 5.

Various SCPT cones are commercially available and contain, among other instruments, pressure sensors 6 to measure pore water pressures, load cells to measure tip resistance 7, a friction sleeve 8, and accelerometers or geophones 9 for detecting seismic waves penetrating through the ground. Geophones are highly sensitive miniature sensors that convert seismic vibrations into electrical signals. An array of geophones 9, preferably consisting of 3 orthogonally oriented geophones, is installed in the cone's housing to record seismic signals in both horizontal (x, y) and vertical (z) directions.

A seismic event is generated at the surface using an impact means. Said impact means consists of an impact hammer 10 and an impact beam 11. According to the invention, the impact hammer 10 is positioned nearby the impact beam 11 and is capable of impacting the beam along its longitudinal axis. This is illustrated in Figure 1 where the hammer 10 generates an impact on a beam 11 causing seismic body waves 12 to propagate from the surface through the soil. These waves are then detected by the seismic sensor(s) installed in the cone penetrometer. The SCPT test measures travel times of primary (P) and secondary (S) waves. In addition to measurements of Vₛ and Vₚ, the SCPT test can also provide standard tip resistance, sleeve friction and porewater pressure readings.

The impact hammer of the invention can consist of a sledgehammer, air-pressure hammer, hydraulic-pressure hammer, explosive hammer or other device capable of producing horizontal impacts on the seismic beam. Preferably, an adjustable impact mechanism is used for said purpose. This is realized by attaching the hammer 10 to an adjustable swing arm 13 as illustrated in Figure 1. Adjustable impact mechanisms are prefered since they generate controlled energy impacts. The hammer is adjusted to strike the anvil of the source beams at a controlable horizontal angle, thereby generating predominantly SH waves. The major advantage of using said adjustable impact mechanisms with impact anvils is that repeatable SH signals can be generated throughout tests.

For purposes of illustration figures 2 and 3 depict several decoupled seismic source mechanisms according to the invention are depicted. They all consist of an impact (lower) beam 11 onto which a load is applied 14 in such a way that the weight of the applied load acts indirectly upon the impact beam. This is realized by providing a load-transferring or load decoupling means between said load and the beam. In both Figures 2 and 3 the decoupling means consists of a roller system 15. An upper bearing plate 16 is placed inbetween the roller system and the load.

According to the invention, the load can be the weight of a CPT truck 14 (as illustrated in Figure 1) or other external weight.

The impact beam 11 of the invention can be made from wood, concrete, metal or similar material(s), ideally measuring 3.2 m in the length, 0.2 m in width and variable height up to 0.3 m. This lower beam can be placed on flat ground or other rigid surface such as rock, pavement or concrete and can have different cross-sectional shapes and material stiffness. Preferably, impact anvils 17 are added to the ends of each beam to provide uniform distribution of impact blows. The impact hammer 10 is always positioned nearby the impact anvil and is capable of producing horizontal impacts on the beam 11. Said impact anvils are not necessarily made from the same material as the impact beam.

As illustrated in Figures 2 and 3, the new seismic sources of the invention are provided with a decoupling means in between the load and impact means. According to the invention, said decoupling means consists essentially of a support frame or upper bearing plate 16 for the load 14 and a load-transferring means 15 positioned between said support frame and the impact means. In all three examples shown in both Figures 2 and 3, the load-transferring means 15 consists of a roller system 15 capable of providing the source beam with at least one degree of freedom of movement along its horizontal longitudinal direction. The function of the support frame is twofold: to protect the load-transferring means, and to support and distribute the load to obtain an optimum coupling stress between impact means and ground surface.

Decoupling the load from the beam has several advantages. Firstly, load-transferring means will limit the increase in overall mass of the beam due to applied coupling stress and will allow the impact beam to move as freely as possible. From the laws of momentum and energy conservation, the velocity of the beam is inversely proportional to its mass for constant-energy hammer impacts. The load transferring system of the invention ensures that loads applied to the impact means do not contribute to an increase in the mass of the beam, thereby maximising the velocity of the beam for a given energy impact. Since the velocity of a beam is proportional to generated signal energy, stronger SH signals are obtained for the method of invention when compared with conventional methods. Said stronger SH signals allow more accurate measurement of seismic velocities and better estimates of geotechnical parameters, as already mentioned.

Another advantage of the new decoupled method over conventional methods includes the ability to perform SCPT tests to larger depths than with conventional methods. This is possible thanks to the generation of high-energy waves. Soils and penetrable media in general absorb part of a signal's energy as it travels through the media. This phenomenon is termed signal damping or attenuation and increases with depth. Generating the highest possible energy signals will, therefore, ensure that a test can be performed to its maximum depth.

In addition, using a decoupled method allows a reduction in time (and costs) required to perform tests, because less stacking is necessary with high-energy waves when compared with low-energy ones. Stacking is a technique often used to improve the quality of generated signals and consists of adding together several signals from a given event to improved quality and signal readability. Stacking, therefore, is time consuming and can significantly delay testing when signals are weak and/or contain low signal-to-noise ratios. Less stacking means that fewer events are needed for a test, which results in both faster test execution in the field and less post-data analysis in the office.

According to another aspect of the invention, the ground penetrating seismic waves are generated from a well-defined starting position on the impact means. As illustrated in Figures 2a and 3a, the impact means of the apparatus of the invention can comprise one flat bottom beam to be placed against a leveled ground surface. However, said impact means can equally comprise a ground surface contacting side provided with a relief. For instance, blades 18 or spikes 19 can be added to the underside of the source, as shown in Figures 2b and 3b, and Figures 2c and 3c, respectively. Flat ended spikes 19 are particularly suitable for use on hard surfaces. On the other hand, sources with a sharp, pointed end, such as pointed blades 18, can be used on soft, easily penetrable surfaces.

According to the invention, said spikes or blades are positioned at one defined point along the beam. This location point can be chosen to suit particular site conditions and needs not be in the center of the beam. In both Figures 2 and 3 the blade or spike is positioned in the center of the beam.

Using a spike or blade on the underside of the lower beam allows accurate measurement of horizontal (and vertical) offset distances because the location of the spike or blade coincides with the precise point of generation of seismic signals. Offset distances, as explained earlier, are needed to compute seismic wave velocities in a SCPT or geophysical seismic test.

When a flat beam without a spike or blade is used, such as shown in figures 2a and 3a, the exact point of origin of primary seismic signals is not known. Conventional methods use this type of flat beam and assume that the point of origin of seismic signals is either at the midpoint or at the ends of the beam. Offset distances are then measured between this point and the point of insertion of the CPT rods. However, offset distances measured this way represent average distances at best and may include large errors depending on where the origin of the signals is located, which further depends on the length of the source and the exact point(s) of contact between the source and the ground.

More specifically, a conventional source generates large numbers of points-source signals along its length. However, the primary point of origin of seismic-wave signals generated with a seismic source, which is here defined as the point of origin of the first signal, coincides with the first point of contact of the source with the ground, measured from the point of impact. The primary point of origin depends on method of loading (even, uneven or point loading) and type of contact between the source and the ground. These parameters are difficult to control in practice. Proper contact between the source and the ground is especially difficult to control because of surface irregularities and constantly changing site conditions. Conventional methods of measuring offset distances are, therefore, approximate at best. Errors introduced by conventional methods will become less important with depth, but will be significant at shallow depths where offset distances are equal to or greater than signal travel lengths. These problems are now overcome when using a source with built-in spikes or blades according to the invention.

According to a yet another embodiment of the invention, the weight of the load is chosen such that an optimum coupling stress for providing maximum shear wave energy or amplitude is obtained. Therefore, the present invention relates to a method for determining the optimum weight of the coupling load for use in the method of the invention. This is done by calculating maximum shear wave amplitudes as a function of coupling stresses.

Amplitude is defined here as the output voltage generated by impact means or seismic source mechanism and measured by seismic sensors (geophones or accelerometers) located in a SCPT cone. Coupling stress is defined as the total weight of the load (including source mechanism) divided by the surface area of the impact beam in contact with the ground.

Several documents were cited throughout this text. Each of the documents cited herein are hereby incorporated by reference, however there is no admission that any document cited is indeed prior art of the present invention.

Further aspects of the present invention will be described in the enclosed non-limiting examples in reference to the enclosed figures.

### EXAMPLES

Tests were performed to compare new method of invention with conventional methods. The tests used a lower steel beam with a flat bottom surface such as shown in Figure 2(a) and Figure 3(a). The beam measured 3.2 m in length, 0.05 m in height and 0.2 m in width. Tests were performed for two types of loading: one using free weights, and the other using the weight of a CPT truck as loading mechanism. All test set-ups were identical, except for the new invention decoupling mechanism and upper bearing plate (as illustrated in Figures 2 and 3), which were removed before performing conventional tests. The results of these tests are presented below, starting with the tests performed using free weights as loading mechanism.

The beam was placed on solid and levelled ground at horizontal and vertical offset distances of respectively 0.73 m and 10.75 m from a seismic cone sensor. Necessary beam-ground coupling was obtained by loading the beam with vertical, evenly-distributed loads. The loads were placed by means of free weights with increments of approximately 11 kN/m².

Tests consisted of generating seismic shear-wave signals using an adjustable swing hammer *(Areias et al. 1999, Variation of Shear Wave Energy with the SCPTT Method, European Journal of Environmental and Engineering Geophysics, vol. 4, Number 1, 1999).* The advantage of using a swing hammer is that the impact energy can be controlled and repeated between tests. A total of 10 events were generated for each load increment. The seismic events were recorded using a computer-based data acquisition system.

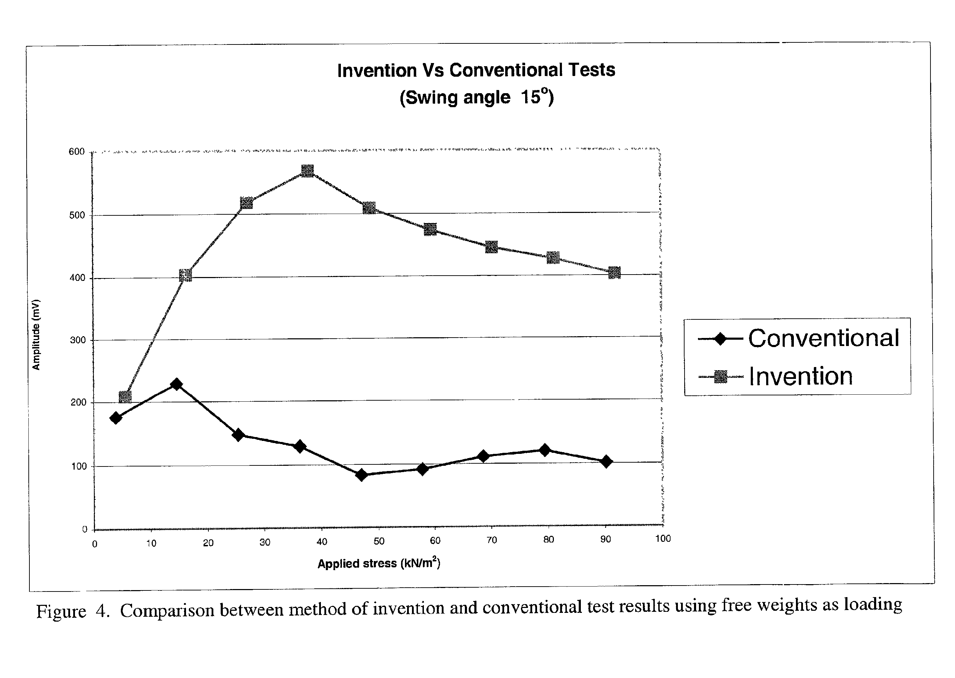

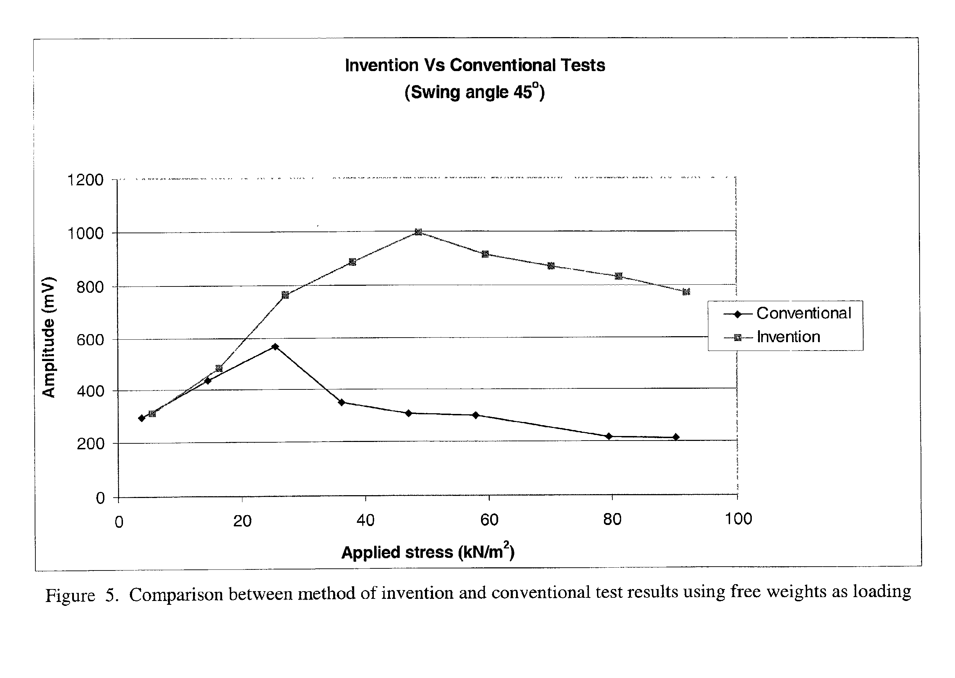

Typical test results are shown in Figures 4 and 5 for two different hammer swing angles of 15° and 45° respectively, corresponding to respectively low- and medium-strength impact forces. The results show average shear wave amplitudes as a function of applied coupling stress for both conventional and invention test methods. The results presented in Figures 4 and 5 show that signals generated with the new method of invention generally contain 2 to 3 times more energy (larger amplitude) than signals generated using conventional methods.

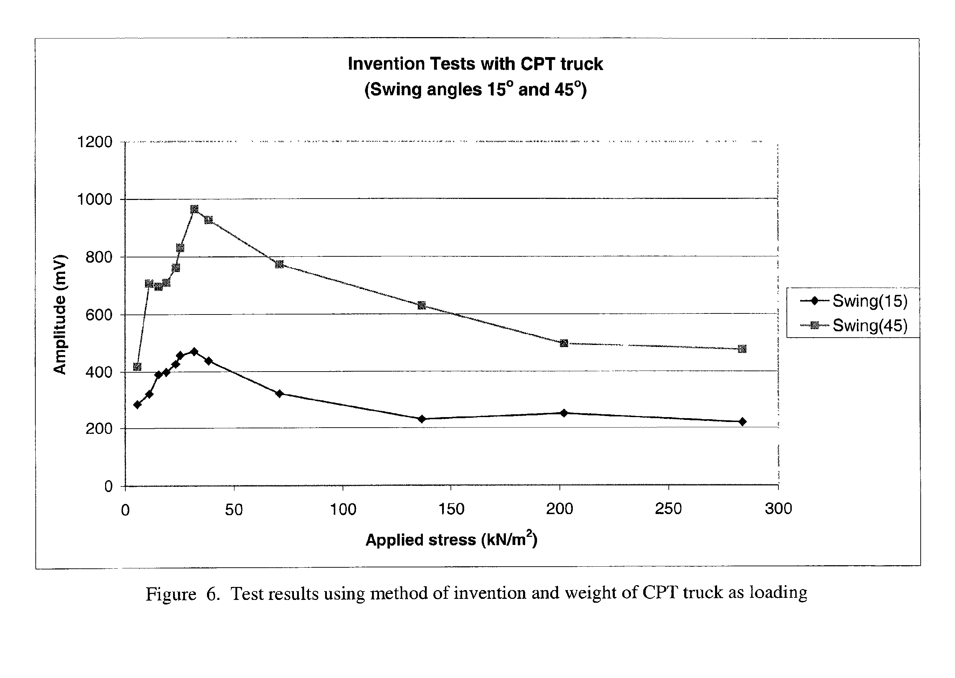

A second series of tests were performed using a CPT truck as loading mechanism to evaluate the performance of the new invention method under different loading conditions. A CPT truck can weigh as much as 20 tonnes, which can load a beam to much higher levels than using free weights. Except for the difference in loading mechanism of the beam, the tests were performed identically to the tests described using free weights. Typical results using the CPT truck and method of invention are presented in Figure 6 for both 15° and 45° impact swing angles. The results show an increase of approximately two-fold between signal amplitudes generated with the method of invention when compared with conventional methods (Figures 4 and 5), which confirms previous results using free weights as load mechanism.

The results further show that a given beam load is necessary for optimum (maximum) signal energy generation. The optimum beam load varies with type of source and impact energy levels. For the tests presented here, the optimum beam load (applied stress) varies between approximately 15 and 25 kN/m² for conventional tests, and 35 and 45 kN/m² for tests performed using the method of invention, for respectively 15° and 45° impact swing angles.

Finally, the results show that loading the source beam outside the range of optimum load results in loss of signal amplitude.

## Claims

1. A method of in-situ seismic geophysical testing comprising the steps of
(a) inserting a seismic cone penetrometer containing at least one geophone to a certain depth in the ground or other penetrable media,
(b) placing nearby the insertion point of the penetrometer an impact means capable of producing ground penetrating seismic waves, and
(c) placing a load having a defined weight upon impact means, **characterized in that** said weight of the load is indirectly acting upon said impact means.

2. The method according to claim 1 wherein said in the ground penetrating seismic waves are generated from a well defined starting position on the impact means.

3. A method for determining the optimum weight of the load for use in the method of claim 1 or 2, by calculating the maximum shear wave amplitude as a function of coupling stress between the impact means and the surface on which it rests.

4. An apparatus for seismic geophysical testing able to carry out the method of claim 1 or 2.

5. An apparatus according to claim 4 comprising
(a) an in the ground insertable seismic cone penetrometer containing at least one geophone capable of detecting seismic waves,
(b) an impact means capable of producing ground penetrating seismic waves,
(c) a load having a defined weight and placed upon said impact means, and
(d) a decoupling means providing an indirect action of the load on the impact means.

6. An apparatus according to claims 4 or 5 **characterized in that** said weight of the load is chosen such that an optimum coupling stress for providing maximum generated seismic signal amplitude is obtained.

7. An apparatus according to any of claims 4-6 **characterized in that** said impact means consists of an impact hammer and an impact beam.

8. An apparatus according to claim 7 **characterized in that** said impact hammer is positioned nearby the impact beam and capable of hammering the impact beam along its longitudinal axis.

9. An apparatus according to any of claims 4-8 **characterized in that** said decoupling means consists essentially of a support frame for the load and load-transferring means positioned between said support frame and impact means.

10. An apparatus according to claim 9 **characterized in that** said load-transferring means are selected from the group consisting of rollers, spheres, springs, elastic rubber, low friction synthetic membranes or other systems capable of providing at least one degree of freedom of horizontal movement to the lower beam.

11. An apparatus according to claims 7 or 8 **characterized in that** said impact beam comprises one ground surface contacting side provided with one or more spikes or blades.

12. An apparatus according to claim 11 **characterized in that** said spikes or blades form a specific contact point between the beam and the ground or rigid surface.

13. An apparatus according to claim 12 **characterized in that** said spikes or blades are positioned at one defined point along the beam.

14. An apparatus according to any of claims 11 to 13 **characterized in that** said spikes or blades have pointed, sharp or flat ended tips.
